# EUROPEAN PATENT APPLICATION

(11) **EP 2 915 859 A1**
(43) Date of publication of application: **09.09.2015**
(21) Application number: 13850813.0
(22) Date of filing: 25.06.2013
(51) Int. Cl.: C09K 3/14, B24B 37/00, C09G 1/02

(54) **POLISHING COMPOSITION**

(30) Priority: 31.10.2012 JP 2012240446
(71) Applicant: Fujimi Incorporated, Kiyosu-shi, Aichi 452-8502 (JP)
(72) Inventor: TAMAI, Kazusei, Kiyosu-shi Aichi 452-8502 (JP); ASAI, Maiko, Kiyosu-shi Aichi 452-8502 (JP); MORINAGA, Hitoshi, Kiyosu-shi Aichi 452-8502 (JP)
(74) Representative: Grünecker Patent- und Rechtsanwälte PartG mbB
(86) International application number: PCT/JP2013/067360
(87) International publication number: WO 2014/069043

(57) **Abstract**

[Abstract] Provided is a polishing composition with which a high glossy surface is achieved by enhancing smoothness of a surface of an alloy material while maintaining a sufficiently high polishing speed for the alloy material. The present invention relates to a polishing composition used for an application of polishing an alloy material, which contains silica particles having a primary particle average aspect ratio of at least 1.10 and a pH controlling agent.

## Description

### TECHNICAL FIELD

The present invention relates to a polishing composition.

### BACKGROUND ART

Alloy is a combination product in which at least one metallic element or non-metallic element like carbon, nitrogen, or silicon is combined with one kind of a metallic element, and it is produced for the purpose of enhancing mechanical strength or properties like chemical resistance, corrosion resistance, and heat resistance for a pure metal. Among them, an aluminum alloy has light weight and also excellent strength, and thus it is used for various applications such as various electric products or electronic components as well as structural materials like constructional material or vessel and transportational machines including an automobile, a ship, and an airplane. Further, as having light weight and excellent corrosion resistance, a titanium alloy is widely used for a fine instrument, an ornament, a tool, a sports gear, a medical component, or the like. Furthermore, stainless as an iron alloy and a nickel alloy have excellent corrosion resistance, and thus they are used for various applications like a tool, a mechanical device, and a cooking instrument in addition to structural materials and transportational machines. Furthermore, a copper alloy has not only excellent electric conductivity, heat conductivity, and corrosion resistance but also excellent processability and beautiful finishing, and thus it is widely used for an ornament, a dishware, a musical instrument, and a component of an electric material.

In the case of using those alloys, the surface thereof maybe finished to have a glossy surface. Finishing for having a glossy surface can be achieved according to a mirror surface treatment by performing coating, for example, painting the surface. However, when the surface is finished by polishing to have a mirror surface, a more favorable glossy surface than a painted surface can be provided and also materials or works relating to coating are not required. Furthermore, since the mirror surface obtained by polishing has higher durability than a glossy surface obtained by painting, it also has an advantage of maintaining a glossy surface for a long period of time.

For such reasons, treating an alloy material to have a mirror surface or a smooth surface according to polishing by using a polishing composition has been conventionally carried out. For example, in JP 2008-544868 W (US 2007/010098 A), a polishing composition used for polishing of an aluminum alloy containing (a) a polishing material selected from a group consisting of silica, ceria, and zirconia, (b) a reagent for oxidizing aluminum, and (c) a liquid carrier is disclosed.

### SUMMARY OF INVENTION

However, the polishing composition described in the aforementioned patent document has a problem that, as it is difficult to maintain high polishing speed for an alloy material and smoothness on a surface of the alloy material is insufficient after polishing, a surface with high gloss is not obtained.

Accordingly, an object of the present invention is to provide a polishing composition with which a highly glossy surface can be obtained by enhancing smoothness of a surface of an alloy material while maintaining a sufficiently high polishing speed for the alloy material.

In order to solve the problems described above, inventors of the present invention conducted intensive studies. As a result, they found that the above problems can be solved by using a polishing composition containing silica particles having a primary particle average aspect ratio of at least 1.10 and a pH controlling agent. Based on this finding, the present invention is completed.

Specifically, the present invention relates to a polishing composition used for an application of polishing an alloy material, in which the composition contains silica particles having a primary particle average aspect ratio of at least 1.10, and a pH controlling agent.

### DESCRIPTION OF EMBODIMENTS

The present invention is a polishing composition used for an application of polishing an alloy material, the polishing composition including silica particles having a primary particle average aspect ratio of at least 1.10 and a pH controlling agent.

In an alloy material, a metallic element having different hardness from a main component is dissolved in the main component and the main component and the metallic element form a solid solution so that, in the case of polishing, a portion containing the element and a portion not containing it exhibit a different polishing speed. Due to such reasons, on a surface of the alloy material after polishing, various defects such as protrusions or depressions that are caused by a difference in polishing speed, or scratches generated by polishing of a portion in which an element with high hardness is contained, occur. Accordingly, it is difficult to have high gloss on a surface (mirror surface) by polishing of those alloy materials.

On the other hand, the polishing composition of the present invention contains silica particles having a primary particle average aspect ratio of at least 1.10 and a pH controlling agent. By having this constitution, a highly glossy surface can be obtained by enhancing smoothness of a surface of an alloymaterial while maintaining a sufficiently high polishing speed for the alloy material.

It has been conventionally believed that, if polishing is performed by using particles having high aspect ratio, surface roughness is worsened compared to particles with low aspect ratio as it is difficult to have smooth contact of the particles on a surface of a subject for polishing. The polishing composition of the present invention is expected to have an effect which is contradictory to the understanding of a related art. Specifically, it is believed that, by using silica particles having high aspect ratio, abrasive force or mechanical force for an alloy material is increased, and as a result, an alloy material which is heterogeneous in terms of the material, hardness, or state of a surface can be easily and homogeneously polished so that the surface roughness is reduced.

Meanwhile, the aforementioned mechanism is based on mere speculation and the present invention is not limited to the mechanism at all.

### [Alloy material]

The polishing composition according to the present invention is used for an application of polishing an alloy material. The alloy material contains metal species to become a main component and other metal species that are different from the main component.

The alloy material is named based on the metal species to become a main component. Examples of the alloy material include an aluminum alloy, a titanium alloy, stainless steel (having iron as main component), a nickel alloy, a copper alloy and the like.

The aluminum alloy has aluminum as a main component and, as metal species that are different from the main component, at least one selected from a group consisting of silicon, iron, copper, manganese, magnesium, zinc, and chrome is contained. The content of the metal species that are different from the main component in aluminum alloy is, relative to total alloy materials, 0.1 to 10% by mass, for example. Examples of the aluminum alloy include, according to the alloy number described in JIS H4000: 2006, 1085, 1080, 1070, 1050, 1050A, 1060, 1100, 1200, 1N00, 1N30, 2014, 2014A, 2017, 2017A, 2219, 2024, 3003, 3103, 3203, 3004, 3104, 3005, 3105, 5005, 5021, 5042, 5052, 5652, 5154, 5254, 5454, 5754, 5082, 5182, 5083, 5086, 5N01, 6101, 6061, 6082, 7010, 7075, 7475, 7178, 7N01, 8021, and 8079; according to the alloy number described in JIS H4040: 2006, 1070, 1060, 1050, 1050A, 1100, 1200, 2011, 2014, 2014A, 2017, 2017A, 2117, 2024, 2030, 2219, 3003, 3103, 5N02, 5050, 5052, 5454, 5754, 5154, 5086, 5056, 5083, 6101, 6N01, 6005A, 6060, 6061, 6262, 6063, 6082, 6181, 7020, 7N01, 7003, 7050, 7075, and 7049A; and according to the alloy number described in JIS H4100: 2006, 1070 A1070S, 1060A 1060S, 1050 A1050S, 1100 A1100S, 1200 A1200S, 2014 A2014S, 2014 A2014AS, 2017 A2017S, 2017 A2017AS, 2024 A2024S, 3003 A3003S, 3203 A3203S, 5052 A5052S, 5454 A5454S, 5083 A5083S, 5086 A5086S, 6101 A6101S, 6N01 A6N01S, 6005A A6005AS, 6060 A6060S, 6061 A6061S, 6063 A6063S, 6082 A6082S, 7N01 A7N01S, 7003 A7003S, 7005 A7005S, 7020 A7020S, 7050 A7050S, 7075 A7075S and the like.

The titanium alloy has titanium as a main component and, as metal species that are different from the main component, aluminum, iron, vanadium or the like is contained, for example. The content of the metal species that are different from the main component in titanium alloy is, relative to total alloy materials, 3.5 to 30% by mass, for example. Examples of the titanium alloy include, according to the types described in JIS H4600: 2012, types 11 to 23, type 50, type 60, type 61, and type 80.

Stainless steel has iron as a main component and, as metal species that are different from the main component, at least one selected from a group consisting of chrome, nickel, molybdenum, and manganese is contained. The content of the metal species that are different from the main component in stainless steel is, relative to total alloy materials, 10 to 50% by mass, for example. Examples of the stainless steel include, according to the types described in JIS G4303: 2005, SUS201, 303, 303Se, 304, 304L, 304NI, 305, 305JI, 309S, 310S, 316, 316L, 321, 347, 384, XM7, 303F, 303C, 430, 430F, 434, 410, 416, 420J1, 420J2, 420F, 420C, and 631J1.

The nickel alloy has nickel as a main component and, as metal species that are different from the main component, at least one selected from a group consisting of iron, chrome, molybdenum, and cobalt is contained. The content of the metal species that are different from the main component in nickel alloy is, relative to total alloy materials, 20 to 75% by mass, for example. Examples of the nickel alloy include, according to the alloy number described in JIS H4551: 2000, NCF 600, 601, 625, 750, 800, 800H, 825, NW0276, 4400, 6002, and 6022.

The copper alloy has copper as a main component and, as metal species that are different from the main component, at least one selected from iron, lead, zinc, and tin is contained. The content of the metal species that are different from the main component in copper alloy is, relative to total alloy materials, 3 to 50% by mass, for example. Examples of the copper alloy include, according to the alloy number described in JIS H3100: 2006, C2100, 2200, 2300, 2400, 2600, 2680, 2720, 2801, 3560, 3561, 3710, 3713, 4250, 4430, 4621, 4640, 6140, 6161, 6280, 6301, 7060, 7150, 1401, 2051, 6711, and 6712.

The main component of an alloy material is preferably any one kind selected from a group consisting of aluminum, titanium, iron, nickel, and copper. More preferred,the alloy material is an alloy material in which the main component of an alloy material is aluminum and at least one metallic element selected from a group consisting of silicon, magnesium, iron, copper, and zinc is contained at the content of 0.5 to 10% by weight relative to total alloy materials.

Next, constitution of the polishing composition of the present invention is described in detail.

### [Silica particles]

The polishing composition of the present invention contains, as abrasive grains, silica particles having a primary particle aspect ratio of at least 1.10.

The type of the silica particles is not particularly limited, and examples thereof include colloidal silica, fumed silica, and sol gel method silica. Among them, from the viewpoint of obtaining the smoothness of an alloy surface more efficiently, fumed silica or colloidal silica is preferable. From the viewpoint of obtaining the particle with a relatively high aspect ratio more easily, fumed silica is more preferable.

The silica particles may be used either singly or as a mixture of two or more types. Furthermore, as for the silica particles, a commercially available product may be used or a synthetic product may be used.

As for the method for manufacturing colloidal silica, a known method can be mentioned. Examples thereof include a method by hydrolysis of an alkoxysilane described in pp. 154 to 156 of "Science of the Sol-Gel Method" (published by Agne Shofu Sha), written by Sumio Sakka; a method described in JP 11-60232 A in which methyl silicate or a mixture of methyl silicate and methanol are added dropwise into a mixed solvent composed of water, methanol, and ammonia or ammonia and an ammonium salt and a reaction between methyl silicate and water is performed; a method described in JP 2001-48520 A in which alkyl silicate is hydrolyzed by using an acid catalyst and thereafter an alkali catalyst is added followed by heating to proceed with polymerization of silicic acid for having particle growth; and a method described in JP 2007-153732 A in which a specific amount of a specific type of hydrolysis catalyst is used for hydrolysis of alkoxysilane. Further examples include a method in which manufacturing is performed according to ion exchange of sodium silicate.

Examples of a method for manufacturing fumed silica include a known method which uses a vapor-phase reaction after vaporizing silicon tetrachloride and combusting it in oxyhydrogen flame. Furthermore, the fumed silica may be prepared as an aqueous dispersion according to a known method. Examples of the method for preparing it as an aqueous dispersion include a method described in JP 2004-43298 A, JP 2003-176123 A, and JP 2002-309239 A.

The primary particle average aspect ratio of the silica particles in the polishing composition is at least 1.10. When the average aspect ratio is less than 1.10, the abrasive force or mechanical force for an alloy material is lowered, and as a result, it is difficult to polish evenly an alloy material. The average aspect ratio is preferably at least 1.25. Meanwhile, the upper limit of the average aspect ratio is not particularly limited.

The average aspect ratio is an average of values obtained by dividing the length of the long side of a minimum rectangle that circumscribes a silica particle in an image taken by a scanning electron microscope, by the length of the short side of the same rectangle, and can be determined by using general image analysis software.

The lower limit of the primary average particle diameter of silica particles that are contained in the polishing composition is preferably 30 nm or higher. As the primary average particle diameter of silica particles increases, the speed of polishing an alloy material is enhanced.

Furthermore, the upper limit of the primary average particle diameter of silica particles that are contained in the polishing composition is preferably 150 nm or lower. More preferably, it is 100 nm or lower. As the primary average particle diameter of silica decreases, it becomes easier to obtain a surface with fewer defects and lower roughness.

Meanwhile, the primary average particle diameter of silica particles can be calculated from a measurement value of specific surface area based on nitrogen adsorption method (BET method) and density. More specifically, it can be obtained by a method described in Examples.

It is preferable that the silica particles contain a particle in which primary particles are aggregated in the number of 2.5 or more on average (hereinbelow, also simply referred to as an aggregated particle). By containing such aggregated particle, the abrasive force or mechanical force for an alloy material of the polishing composition is increased more so that an alloy material which is heterogeneous in terms of the material, hardness, or state of a surface can be easily and homogeneously polished. Meanwhile, the upper limit of the number of primary particles in an aggregated particle is, although not particularly limited, preferably 13 or less on average from the viewpoint of easy production or the like.

As for the method for obtaining the aggregated particle, it is possible to obtain it by associating silica particles during or after manufacturing silica particles, although it may vary depending on a method of manufacturing the silica particles.

The number of primary particles constituting an aggregated particle is obtained as an approximate value by dividing the average particle diameter of an aggregated particle by an average particle diameter of primary particles constituting the aggregated particle. The average particle diameter of an aggregated particle indicates a volume average particle diameter which is obtained by a dynamic light scattering method. The average particle diameter of primary particles constituting an aggregated particle is an average value of a particle diameter of particles, which is obtained by measuring an area of an image of silica particles by a scanning transmission type electron microscope and determining the diameter of an area which is the same as the aforementioned image. It can be determined by using general image analysis software.

The lower limit of the content of abrasive grains in the polishing composition is preferably 1% by weight or more, and more preferably 2% by weight or more. As the content of abrasive grains increases, the speed of polishing an alloy material by the polishing composition is enhanced.

Furthermore, the upper limit of the content of abrasive grains in the polishing composition is preferably 40 % by weight or less, and more preferably 30% by weight or less. As the content of abrasive grains decreases, not only the cost for preparing the polishing composition can be reduced but also it becomes easier to obtain a surface with less scratch by polishing using the polishing composition. Furthermore, as the content of the abrasive grains decreases, the residual amount of the abrasive grains relative to the alloy decreases, and thus the washing property is improved.

### [pH controlling agent]

The polishing composition of the present invention contains a pH controlling agent. The pH controlling agent controls pH of the polishing composition and, accordingly, it can control the speed of polishing an alloy material, dispersibility of abrasive grains, or the like. The pH controlling agent may be used either singly or as a mixture of two or more types.

As for the pH controlling agent, a known acid, base, or a salt thereof can be used. Specific examples of the acid that can be used as the pH controlling agent include inorganic acids such as hydrochloric acid, sulfuric acid, nitric acid, hydrogen fluoride acid, boric acid, carbonic acid, hypophosphorous acid, phosphorous acid, or phosphoric acid, and organic acids such as formic acid, acetic acid, propionic acid, butyric acid, valeric acid, 2-methylbutyric acid, n-hexanoic acid, 3,3-dimethylbutyric acid, 2-ethylbutyric acid, 4-methylpentanoic acid, n-heptanoic acid, 2-methylhexanoicacid, n-octanoicacid, 2-ethylhexanoic acid, benzoic acid, glycolic acid, salicylic acid, glyceric acid, oxalic acid, malonic acid, succinic acid, glutaric acid, adipic acid, pimelic acid, maleic acid, phthalic acid, malic acid, tartaric acid, citric acid, lactic acid, diglycolic acid, 2-furan carboxylic acid, 2,5-furan dicarboxylic acid, 3-furan carboxylic acid, 2-tetrahydrofuran carboxylic acid, methoxyacetic acid, methoxyphenylacetic acid, or phenoxyacetic acid. When an inorganic acid is used as a pH controlling agent, sulfuric acid, nitric acid, phosphoric acid, or the like are particularly preferable from the viewpoint of enhancing the polishing speed. When an organic acid is used as a pH controlling agent, glycolic acid, succinic acid, maleic acid, citric acid, tartaric acid, malic acid, gluconic acid, itaconic acid, or the like is preferable.

Examples of the base that can be used as a pH controlling agent include amines such as aliphatic amine or aromatic amine, organic bases such as quaternary ammonium hydroxide, hydroxides of an alkali metal such as potassium hydroxide, hydroxides of an alkali earth metal, and ammonia.

Among them, from the viewpoint of easy obtainability, potassium hydroxide or ammonia is preferable.

Furthermore, as a pH controlling agent, a salt like ammonium salt or alkali metal salt of the aforementioned acid may be used for substituting the acid, or in combination of the acid. In particular, in case of having a combination of weak acid and strong base, strong acid and weak base, or weak acid and weak base, it is expected to have a pH buffering activity. Furthermore, in case of having a combination of strong acid and strong base, not only the pH but also the conductivity can be controlled even with a small amount.

The addition amount of the pH controlling agent is not particularly limited, and it can be suitably controlled so as to have desired pH of the polishing composition.

The lower limit of the pH of the polishing composition of the present invention is preferably 2 or higher, and more preferably 8 or higher. As the pH of the polishing composition increases, the dispersibility of silica particles as abrasive grains is improved.

Furthermore, the upper limit of the pH of the polishing composition of the present invention is preferably 12 or lower, and more preferably 11.5 or lower. As the pH of the polishing composition deceases,the dispersibility ofsilica particles, safety of the composition, and economic value of the composition are further improved.

### [Water]

The polishing composition of the present invention preferably contains water as a dispersion medium or a solvent for dispersing or dissolving each component. From the viewpoint of suppressing inhibition of an activity of other components, water containing as less impurities as possible is preferable. Specifically, pure water or ultra pure water from which impurities are removed by pass-through of a filter after removing impurity ions by using an ion exchange resin, or distilled water is preferable.

### [Other components]

The polishing composition of the present invention may further contain, if necessary, other components such as an etching agent for promoting dissolving of an alloy material, an oxidizing agent for oxidizing a surface of an alloy material, a water soluble polymer and a copolymer, a salt and a derivative thereof which acts on a surface of an alloy material or on a surface of abrasive grains, an anti-corrosion agent or a chelating agent for inhibiting corrosion of a surface of an alloy material, a dispersion aid to facilitate re-dispersion of an aggregate of abrasive grains, a preservative or an anti-mold agent having other activities.

Examples of the etching agent include inorganic acids such as nitric acid, sulfuric acid, or phosphoric acid, organic acids such as acetic acid, citric acid, tartaric acid, or methanesulfonic acid, inorganic alkali such as potassium hydroxide or sodium hydroxide, and organic alkali such as ammonia, amine, quaternary ammonium hydroxide and the like. Examples of the oxidizing agent include hydrogen peroxide, peracetic acid, percarbonate salt, urea peroxide, perchloric acid salt, persulfate salt and the like. Examples of the water soluble polymer and copolymer, a salt and a derivative thereof include polycarboxylic acid such as polyacrylate salt, polyphosphonic acid, polysulfonic acid such as polystyrene sulfonic acid, polysaccharides such as xanthan gum or sodium alginate, cellulose derivatives such as hydroxyethyl cellulose or carboxymethyl cellulose, polyethylene glycol, polyvinyl alcohol, polyvinylpyrrolidone, polyoxyethylene alkyl ether, polyoxyethylene alkyl phenyl ether, sorbitan monooleate, and an oxyalkylene-based polymer having one kind or plural kinds of an oxyalkylene unit and the like. Examples of the anti-corrosion agent include amines, pyridines, tetraphenyl phosphonium salt, benzotriazoles, triazoles, tetrazoles, benzoic acid and the like. Examples of the chelating agent include a carboxylic acid-based chelating agent such as gluconic acid, an amine-based chelating agent such as ethylenediamine, diethylenetriamine, or trimethyltetraamine, a polyaminopolycarbon-based chelating agent such as ethylenediaminetetraacetic acid, nitrilotriacetic acid, hydroxyethyl ethylenediaminetriacetic acid, triethylenetetraaminehexaacetic acid, or diethylenetriaminepentaacetic acid, an organic phosphonic acid-based chelating agent such as 2-aminoethyl phosphonic acid, 1-hydroxyethylidene-1,1-diphosphonic acid, aminotri(methylene phosphonic acid), ethylene diaminetetrakis (methylene phosphonic acid), diethylene triaminepenta (methylene phosphonic acid), ethane-1,1-dihosphonic acid, ethane-1,1,2-triphosphonic acid, methanehydroxy phosphonic acid, or 1-phosphonobutane-2,3,4-tricarboxylic acid, a phenol derivative, 1,3-diketone and the like. Examples of the dispersion aid include condensed phosphoric acid salt such as pyrophosphoric acid, hexametaphosphoric acid and the like. Examples of the preservative include sodium hypochlorite and the like. Examples of the anti-mold agent include oxazoline such as oxazolidine-2,5-doine and the like.

### [Method of manufacturing a polishing composition]

The method for producing a polishing composition according to the present invention is not particularly limited. It can be obtained by, for example, stirring and mixing, in water, silica particles, a pH controlling agent, and other components, if necessary.

The temperature for mixing each component is not particularly limited. However, it is preferably 10 to 40°C and heating may be performed to increase the dissolving speed. The mixing time is not particularly limited, either.

### [Polishing method and method for preparing alloy material]

As it has been described above, the polishing composition of the present invention is preferably used for polishing of an alloy material. Therefore, the present invention provides a method for polishing an alloy material by using the polishing composition of the present invention. The present invention also provides a method of preparing an alloy material including a step of polishing an alloy material by the aforementioned polishing method.

When alloy is polished by using the polishing composition of the present invention, the polishing can be performed by using an apparatus or conditions that are commonly used for polishing of a metal. Examples of a general polishing apparatus include a single-side polishing apparatus and a double-side polishing apparatus. According to a single-side polishing apparatus, a substrate is held by using a holding device referred to as a carrier, and by rotating a surface plate while supplying a polishing composition and pressing tightly the surface plate having a polishing cloth attached on a single side of a substrate, a single side of an alloy material is polished. According to a double-side polishing apparatus, a substrate is held by using a holding device referred to as a carrier, and by rotating a surface plate in an opposite direction while supplying a polishing composition from above and tightly pressing the surface plate having a polishing cloth attached on its surface facing the substrate, both sides of an alloy material are polished. In that case, polishing is achieved by physical actions based on abrasion among a polishing pad, the polishing composition, and an alloy, and chemical actions on alloy performed by the polishing composition.

As polishing conditions for the polishing method of the present invention, a polishing load can be mentioned. In general, as the load increases, abrasion force by abrasive grains is also increased and mechanical processing power is improved, and thus polishing speed is enhanced. Although the load for the polishing method of the present invention is not particularly limited, it is preferably 50 to 1,000 g/cm² per unit area of a substrate. It is more preferably 80 to 800 g/cm², and even more preferably 100 to 600 g/cm². When it is within this range, sufficient polishing speed is exhibited so that wafer damage caused by the load or an occurrence of defects like surface scratch or the like can be suppressed.

As other polishing conditions for the polishing method of the present invention, linear speed for polishing can be also mentioned. In general, the number of revolution of a polishing pad, the number of revolution of a carrier, the size of a substrate, the number of substrates, or the like has an effect on liner speed. When linear speed is high, abrasion force applied on a substrate increases so that the activity of mechanical polishing of an edge also increases. Furthermore, abrasion heat is generated by abrasion, and thus chemical activity of the polishing composition may also increase. According to the polishing method of the present invention, the linear speed is not particularly limited, but it is preferably 10 to 300 m/minute, and more preferably 30 to 200 m/minute. When it is within this range, sufficient polishing speed is obtained, and by suppressing breakage of a polishing pad by abrasion of a substrate and having sufficient abrasion delivered to a substrate, so-called substrate gliding state can be prevented. Thus, sufficient polishing can be achieved.

As for the polishing pad which is used for the polishing method by using the polishing composition of the aforementioned embodiment, those having a difference in physical properties like hardness and thickness and those containing or not containing abrasive grains can be exemplified in addition to those having a difference in materials like a polyurethane type, a non-woven fabric type, and a suede type. Among them, a suede type not containing abrasive grains is preferably used. Furthermore, even among the suede type pads, those having little deformation caused by pressure during processing, in other words a pad with high hardness is preferable. Specifically, pad hardness is preferably 75 or more according to TECLOCK measurement. For example, by using polyethylene terephthalate or a non-woven fabric as a substrate, a suede type pad with high hardness can be obtained. TECLOCK measurement method is defined in JIS K6253: 1997.

As polishing conditions for the polishing method of the present invention, a supply amount of the polishing composition can be mentioned. The supply amount may vary depending on the type of a substrate to be polished, a polishing apparatus, and polishing conditions. However, it may be an amount sufficient for supplying, without unevenness, the polishing composition to an entire surface between a substrate and a polishing pad. When the supply amount of the polishing composition is small, the polishing composition may not be supplied to an entire substrate or defects on a substrate surface may be caused due to drying and solidification of the composition. On the other hand, when the supply amount is high, it is economically unfavorable and also polishing may be inhibited due to disruption of abrasion by an excess polishing composition, in particular, a medium like water.

The polishing method of the present invention may have a preliminary polishing step in which other polishing composition is used before the polishing step. When there is a processing damage or a dent which occurs during transportation on an alloy surface, it takes a long time to transform those defects into a mirror surface by a single step. Thus, there is a disadvantage that not only it is economically unfavorable but also the smoothness may be impaired. By removing defects on an alloy surface by a preliminary polishing step, the polishing time required for polishing by the polishing method of the present invention can be shortened, and therefore it is expected to efficiently obtain an excellent mirror surface. Hereinbelow, the preliminary polishing composition used for the preliminary polishing step is described.

As a preliminary polishing composition used for the preliminary polishing step, a composition having higher polishing power than the polishing composition which is used in the present invention is preferably used. Specifically, it is preferable to use abrasive grains which have higher hardness and a larger size than the abrasive grains that are used for the polishing composition used for the present embodiment.

Examples of the abrasive grains that are included in the preliminary polishing composition include silicon carbide, aluminum oxide (alumina), zirconia, zircon, ceria, titania and the like, but it is not limited thereto. Among those abrasive grains, it is particularly preferable to use aluminum oxide. The type of aluminum oxide is not particularly limited. For example, α-alumina, β-alumina, θ-alumina, κ-alumina, and other morphologically different aluminum can be used. Further, aluminum oxide may contain, in addition to aluminum, an impurity element like silicon, titanium, iron, copper, chromium, sodium, potassium, calcium, magnesium and the like.

Meanwhile, when an alloy material is a hard and brittle material and it is polished at high speed, it is preferable to use alumina containing α-alumina as a main component in which α degree in crystal state of the alumina constituting alumina abrasive grains is 20% or higher, and preferably 40% or higher. As described herein, α degree of alumina is obtained from integrated intensity ratio of (113) plane diffraction ray according to X ray diffraction measurement.

The average particle diameter of the abrasive grains contained in a preliminary polishing composition is preferably 0.1µm or more, and more preferably 0.3µm or more. As the average particle diameter of the abrasive grains increases, the polishing speed for an alloy material is enhanced.

The average particle diameter of the abrasive grains contained in a preliminary polishing composition is preferably 20µm or less, and more preferably 5µm or less. As the average particle diameter of the abrasive grains decreases, it becomes easier to obtain a surface having less defects and low roughness. Meanwhile, measurement of the average particle diameter of the abrasive grains can be performed by a laser diffraction/scattering type particle size distribution measurement device, for example, "LA-950" manufactured by Horiba, Ltd.

The specific surface area of the abrasive grains contained in a preliminary polishing composition is preferably 20 m²/g or less. As the specific surface area of the abrasive grains decreases, the polishing speed for an alloy material increases. The specific surface area of the abrasive grains contained a preliminary polishing composition is preferably 5 m²/g or more. As the specific surface area of the abrasive grains increases, it becomes easier to obtain a surface with fewer defects and lower roughness. Meanwhile, measurement of the specific surface area of the abrasive grains can be performed by using "Flow SorbII 2300" manufactured by Micromeritics Instrument Corporation.

The content of the abrasive grains in a preliminary polishing composition is preferably 0.5% by mass or more, and more preferably 1% by mass or more. As the content of the abrasive grains increases, the polishing speed of the polishing composition for an alloy material is enhanced.

The content of the abrasive grains in a preliminary polishing composition is preferably 20% by mass or less, and more preferably 10% by mass or less. As the content of the abrasive grains decreases, not only the cost for producing the polishing composition can be saved but also it becomes easier to obtain a surface with less scratches that are caused by polishing using the polishing composition.

Like the pH of the polishing composition, the pH of the preliminary polishing composition may vary depending on the type of an alloy material to be polished. The pH of the preliminary polishing composition is adj usted by a known acid, a base, or a salt thereof. Among them, when an organic acid, in particular glycolic acid, succinic acid, maleic acid, citric acid, tartaric acid, malic acid, gluconic acid, or itaconic acid, is used as an acid, it is expected to have increased polishing speed due to an action on a surface of abrasive grains or the like.

When an alloy material is polished by using the polishing composition of the present invention, the polishing composition used once for polishing can be recovered and used again for polishing. As an exemplary method for recycling the polishing composition, a method including recovering in a tank the polishing composition discharged from a polishing apparatus and using it again after recycling it into a polishing apparatus can be mentioned. Recycling of the polishing composition is useful in that an environmental load can be lowered by reducing an amount of the polishing composition discharged as a waste liquid and the production cost involved with polishing of an alloy material can be saved by reducing the amount of the polishing composition for use.

When the polishing composition of the present invention is recycled, silica particles, a pH controlling agent, and a part or all of other additives that are consumed and lost by polishing can be added as a composition controlling agent during recycling. In that case, as a composition controlling agent, a mixture in which silica particles, a pH controlling agent, and a part or all of other additives are admixed with one another at any ratio can be used. By further adding a composition controlling agent, the polishing composition is adjusted to a composition which is suitable for recycling, and thus polishing is maintained at desired level. Concentration of the abrasive grains, an oxidizing agent, and other additives that are contained in the composition controlling agent can be any concentration, and although it is not particularly limited, it is preferably controlled at suitable level depending on a size of a circulation tank or conditions for polishing.

The polishing composition of the present invention may be a one-component type or a multi-component type such as a two-component type. Furthermore, the polishing composition of the present invention may be prepared by dilution of at least 10 times of a stock solution of the polishing composition by using a dilution liquid like water.

### EXAMPLES

Hereinbelow, the present invention is described by using the following Examples and Comparative Examples. However, the technical scope of the present invention is not limited to the following Examples.

### (Examples 1 to 4 and Comparative Examples 1 to 4)

As abrasive grains, silica particles shown in Table 2 were diluted with water to have content of 20% by weight, and also by adding potassium hydroxide as a pH controlling agent such that pH of the composition becomes 10.2, a polishing composition was prepared. Meanwhile, the term "Fumed" and "Colloidal" in the column of silica particles in Table 2 indicate fumed silica and colloidal silica, respectively.

Furthermore, the primary average particle diameter of silica particles was calculated from specific surface area of silica particle which has been measured based on BET method using "Flow SorbII 2300" manufactured by Micromeritics Instrument Corporation, and density of silica particles. Furthermore, the primary particle average aspect ratio was calculated as an average value of measurement of 1000 particles by using S-4700, which is a scanning type electron microscope manufactured by Hitachi High-Technologies Corporation.

Furthermore, the volume average particle diameter of an aggregated particle was measured by using a particle size analyzer based on dynamic light scattering (UPA-UT151, manufactured by Nikkiso Co., Ltd.). The average particle diameter of primary particles constituting an aggregated particle was calculated as an average value of measurement of 1000 particles by using HD-2700, which is a scanning transmission type electron micro scope manufactured by Hitachi High-Technologies Corporation. The number of primary particles constituting an aggregated particle was obtained by dividing the volume average particle diameter of an aggregated particle, which has been measured as described above, by the average particle diameter of primary particles constituting an aggregated particle, which has been calculated as described above.

The aluminum alloy described in the column of "Alloy material" in Table 2 was subjected to a polishing step for polishing it by using the polishing composition of each Example and Comparative Example. The surface of aluminum alloy as a polishing subject indicates a surface which has undergone preliminary polishing to have surface roughness Ra of about 20 nm. Meanwhile, "5052" shown in the column of the alloy material in Table 2 indicates the alloy number 5052 described in JIS H4000: 2006, and "6063" shown therein indicates the alloy number 6063 described in JIS H4000 : 2006. The polishing conditions for the polishing step are shown in the following Table 1.

Furthermore, polishing speed and surface roughness of a polished surface of an alloy material after the polishing step were measured according to the methods shown below.

### <Polishing speed>

The weight of an alloy material before the polishing step and the weight of an alloy material after the polishing step were measured, and polishing speed was calculated from a difference in the weight before and after the polishing step. The results are shown in the column of "Polishing speed" of Table 2 shown below.

### <Surface roughness>

"Ra", which represents the surface roughness of a polished surface of an alloy material after the polishing step, was measured by using a surface shape analyzer (product name: ZYGO New View 5000 5032, manufactured by Zygo Corporation) based on a method described in JIS B0601: 2001. Meanwhile, "Ra" is a parameter which indicates an average amplitude in height direction of a roughness curve, and it represents an arithmetic mean of a surface height of an alloy material within a predetermined viewing range. As for the conditions for measurement by a surface shape analyzer, the measurement range was set at 1.4 mm x 1.1 mm. The results are shown in the column of "Surface roughness Ra" in Table 2 shown below.

**[Table 1]**

| | |
|---|---|
| Polishing apparatus | Single-side polishing apparatus (surface plate diameter 380 mm) |
| Polishing pad | Suede type |
| Polishing load | 130 g/cm² |
| Number of revolution of surface plate | 80 rpm |
| Linear speed | 63.6 m/minute |
| Polishing time | 10 minutes |
| Speed of supplying polishing composition | 14 ml/minute (use amount for single supply) |
| Subject for polishing (alloy material) | Three pieces (each with a size of 32 mm x 32 mm x 5 mm) were supported on a carrier and then polished simultaneously |

**[Table 2]**

| | Alloy material | Silica Particle | Primary average particle diameter [nm] | Aspect ratio | Number of primary particles in aggregated particle | Polishing speed [um /min] | Surface roughness Ra [nm] |
|---|---|---|---|---|---|---|---|
| Example 1 | 5052 | Fumed | 30 | 1.31 | 4.3 | 0.11 | 2.5 |
| Example 2 | 5052 | Colloidal | 50 | 1.16 | Less than 2.0 | 0.10 | 3.5 |
| Example 3 | 6063 | Fumed | 30 | 1.31 | 4.3 | 0.12 | 2.0 |
| Example 4 | 6063 | Colloidal | 50 | 1.16 | Less than 2.0 | 0.11 | 3.0 |
| Comparative Example 1 | 5052 | Fumed | 180 | 1.02 | Less than 2.0 | 0.02 | 5.4 |
| Comparative Example 2 | 5052 | Colloidal | 50 | 1.03 | Less than 2.0 | 0.09 | 4.6 |
| Comparative Example 3 | 6063 | Fumed | 180 | 1.02 | Less than 2.0 | 0.02 | 4.9 |
| Comparative Example 4 | 6063 | Colloidal | 50 | 1.03 | Less than 2.0 | 0.10 | 4.1 |

As shown in Table 2, the surface roughness (Ra) of an alloy material which has been polished by using the polishing composition of Examples 1 to 4 was a smaller value than the case of using the polishing composition of Comparative Examples 1 to 4. It was found based on these results that, when the polishing composition of Examples is used, an alloy material having a polished surface with low surface roughness Ra, that is, an alloy material having a polished surface with high smoothness, can be easily obtained while sufficiently high polishing speed for the alloy material is maintained.

Meanwhile, this application is based on Japanese Patent Application No. 2012-240446 which has been filed on October 31, 2012, the disclosed contents of which are entirely incorporated herein by reference.

## Claims

1. A polishing composition used for an application of polishing an alloy material, the polishing composition comprising silica particles having a primary particle average aspect ratio of at least 1.10 and a pH controlling agent.

2. The polishing composition according to claim 1, wherein the silica particles comprise a particle in which the primary particles are aggregated in a number of 2.5 or more on average.

3. The polishing composition according to claim 1 or 2, wherein the silica particles have a primary average particle diameter of 30 nm or more.

4. The polishing composition according to any one of claims 1 to 3, wherein the main component of the alloy material is any one kind selected from a group consisting of aluminum, titanium, iron, nickel, and copper.

5. The polishing composition according to any one of claims 1 to 4, wherein the main component of the alloy material is aluminum and at least one metallic element selected from a group consisting of silicon, magnesium, iron, copper, and zinc is contained at the content of 0.5 to 10% by weight relative to the total alloy materials.

6. A polishing method for polishing an alloy material by using the polishing composition described in any one of claims 1 to 5.

7. A method for producing an alloy material comprising a step of polishing by the polishing method described in claim 6.
